(19) Europäisches Patentamt
European Patent Office
Office européen des brevets

(11) EP 0 523 908 B1

(12) EUROPEAN PATENT SPECIFICATION

(45) Date of publication and mention of the grant of the patent:
**18.09.1996 Bulletin 1996/38**

(51) Int Cl.6: **G06K 9/62**, G07C 9/00

(21) Application number: **92306284.8**

(22) Date of filing: **08.07.1992**

(54) **Method and apparatus for controlling a system, using signature verification**

Verfahren und Gerät zum Steuern eines Systems unter Verwendung von Unterschriftsprüfung

Procédé et appareil de commande d'un système, utilisant la vérification de signatures

(84) Designated Contracting States:
**DE FR GB IT NL**

(30) Priority: **19.07.1991 US 732558**

(43) Date of publication of application:
**20.01.1993 Bulletin 1993/03**

(73) Proprietor: **AT&T Corp.**
**New York, NY 10013-2412 (US)**

(72) Inventor: **Nelson, Winston Lowell**
**Morristown, New Jersey 07960 (US)**

(74) Representative:
**Watts, Christopher Malcolm Kelway, Dr. et al**
**Lucent Technologies (UK) Ltd,**
**5 Mornington Road**
**Woodford Green Essex, IG8 0TU (GB)**

(56) References cited:
**FR-A- 2 649 509**
**GB-A- 2 104 698**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 523 908 B1

## Description

### Field of the Invention

This invention relates to the field of pattern recognition, and more specifically, to the verification of handwritten, human signatures.

### Art Background

The automatic verification of a signature is a useful way to identify a human being for purposes, e.g., of establishing his authority to complete an automated transaction, or gain control of a computer, or gain physical entry to a protected area. Signatures are particularly useful for identification because each person's signature is highly unique, especially if the dynamic properties of the signature are considered in addition to the shape of the signature. Even if a skilled forger can accurately reproduce the shape of a signature, it is unlikely that he can reproduce the dynamic properties as well.

Numerous practitioners have addressed the problem of signature verification. Some practitioners have concentrated on analysis of the static shapes embodied in signatures, whereas other practitioners have concentrated on analysis of dynamic properties. For example, a verification method that involves analyzing the dynamic properties of signatures is described in U.S. Patent No. 4,901,358, issued to L. Bechet on February 13, 1990. That patent discloses a verification method based on the x and y speed signals of the signature. Each speed signal is broken into standardized, short segments, and each segment is compared with a corresponding segment of a previously obtained reference signature. In a contrasting approach, U.S. Patent No. 4,024,500, issued to N.M. Herbst, et al. on May 17, 1977, discloses the use of the speed signal to separate the signature into segments, followed by shape analysis of the segments. A third approach is described in EP-A-514082. In that approach, a model signature is used as a reference for shape analysis. The model signature is constructed by affine invariant averaging of reference signature segments. In a speed-based segmentation method, each signature to be segmented is compared to a selected reference signature through the use of dynamic time warping.

However, when a person's (hereafter, an "entrant's") signature is verified according to one of the above-described methods, it is compared, segment-by-segment, to a reference signature. As a consequence, such methods require a relatively large amount of information about the reference signature to be stored. This requirement is disadvantageous in applications where the relevant reference information is to be stored at a remote location where only limited storage means are available. For such applications, it is desirable to characterize the entrant's signature by a set of numerical parameters which, although relatively small, still identifies that person's signature with a high degree of confidence.

Moreover, such a parameter-based technique, even if it fails to provide an acceptable confidence level, is useful in combination with more complex techniques (based, e.g., on pattern-matching) which offer greater confidence at the cost of greater delay or greater information storage requirements. In such a combination, the parameter-based technique is useful as a coarse sieve for rejecting gross forgeries or anomalous signatures, without the need to invoke the more complex technique.

A signature verification technique based on numerical parameters has, in fact, been described. U.S. Patent No. 3,699,517, issued to James W. Dyche on October 17, 1972, describes a technique in which sixteen components of a real-time signature vector are compared to the corresponding mean values computed on a reference set of previously obtained sample signatures. If a sufficient number of the components fall within a predetermined range of the respective mean values, the signature is accepted.

Although such a technique may offer advantageously low storage requirements and rapid processing, it is still relatively inefficient. In that regard, we have found that a given entrant's signatures can be dependably verified on the basis of fewer than sixteen parameters, particularly when the specific selection of parameters is adaptable to the idiosyncrasies of a given entrants's handwriting. Hitherto, practitioners have failed to provide such flexibility, and have consequently failed to provide a parameter-based signature verification method having extremely high efficiency.

GB-A-2104698 describes a signature verification technique based on numerical parameters and their statistical properties. FR-A-2649509 describes a signature verification technique based on groups of numerical parameters optimally selected for their ability to separate authentic from forged signatures, for a particular individual.

### Summary of the Invention

The problems associated with the above prior art are overcome by the method of claim 1. In one aspect, the invention involves a method for controlling access to a system of the kind in which access is based on signature verification. The invention is typically practiced in a communications network, for example, a plurality of bank branches, each communicating with a central office via telephone lines, or a plurality of workstations intercommunicating via a local area network.

In preferred embodiments, an entrant submits sample signatures via digitizing means which facilitate the storage of the sample signatures in digital form. In an initializing phase, each entrant digitally records a set of at least two authorized sample signatures, here referred to as the "reference set," using the digitizing means. In

a later, verification phase, a person (claiming to be an authorized entrant having earlier recorded sample signatures) again digitally records a signature, here referred to as an "entrant signature." The verification process involves the calculation of one or more error values, hereafter referred to as "entrant errors", which represent the degree to which the entrant signature differs from the authorized sample signatures. If the entrant error is less than (or, alternatively, less than or equal to) a certain threshold, responsive means are activated, e.g., an electric circuit or logical operation is activated, such that the entrant is given access to the system. If the requirement is not satisfied, the entrant may, optionally, be invited to submit one or more additional entrant signatures for verification.

In the initializing phase of the preferred embodiment, the sample signatures are digitally processed, resulting in a set of at least four calculated values which are characteristic of the sample signatures and represent a certain group of spatial and dynamic properties, here referred to as "measures," of the sample signatures. A number, representing the average or most typical such value over the set of reference signatures, is calculated. Such a number is hereafter referred to as an "average". The currently preferred such average is the statistical mean. A number is also calculated, which represents the variability of the measure over the set of reference signatures. Such a number is hereafter referred to as a "deviation". The currently preferred such deviation is the statistical standard deviation. Significantly, and in contrast to the prior art, a subset consisting of the at least three measures having the smallest deviations over the set of reference signatures is selected for subsequent use in the verification phase.

As part of the initializing phase of the preferred embodiment, the threshold is calculated on the basis of information derived from the reference signatures. For each reference signature, each of the selected measures, evaluated for that signature, is compared to the corresponding average over the reference set. Such comparison leads to a set of calculated errors, one for each reference signature, with respect to the reference set. The threshold is determined on the basis of those errors, which are hereafter referred to as "reference errors".

The verification phase includes one or more stages, typically including a parameter-matching stage. In that stage, at least one entrant signature is digitally processed to evaluate the selected measures with respect to that signature. The entrant error is calculated by comparing these measure values to the corresponding mean reference values.

## Brief Description of the Drawings

FIG. 1 is a flowchart describing, in schematic fashion, the steps according to one embodiment of the inventive method.

FIG. 2 is a flowchart describing, in schematic fashion, an exemplary sequence of steps leading to the determination of a threshold useful in connection with the inventive method for rejecting forged signatures.

FIGS. 3 - 6 are bar graphs illustrating the ability of the invention to discriminate authentic signatures from forgeries.

## Detailed Description of a Preferred Embodiment

A system is provided, which is capable of offering access to, or withholding access from, a human being, here referred to as an "entrant". As noted, above, access is contingent upon successful verification of the entrant's signature.

If, for example, the system is an automated bank teller machine, such access is the ability of the entrant to conduct a banking transaction using the system. Access is exemplarily provided by activating an electric circuit which controls the system such that it can conduct a transaction. (Such activation of an electic circuit may, e.g., comprise setting a digitally stored value, or "flag," in a digital memory.) Other forms of "access" that may be provided by activating an electric circuit will be readily apparent, and include, e.g., deactivation of a physical locking mechanism, or setting a digitally stored value such that a computer or computer terminal will subsequently respond to the entrant's commands.

Exemplary digitizing means comprise a capacitance-sensing, transductive tablet which senses the position (i.e., the horizontal, or x coordinate and the vertical, or y coordinate) of the tip of a stylus, and transmits that information to a digital storage device (e.g., a digital computer). Preferably, such means are also capable of sensing, and transmitting data representing, the stylus pressure (exemplarily by means of a pressure transducer in the stylus). One suitable stylus-tablet inputting apparatus is described in co-pending U.S. patent application Serial No. 635,086, filed on February 28, 1990.

When a user is establishing his authorization as an entrant, he enters a reference set of at least two sample signatures. (The total number of signatures in the reference set is denoted by the positive integer n.) In fact, it is desirable for him to enter at least 5 signatures, and even as many as 10 or more. Each signature is recorded as a sequence of x-y coordinate pairs recorded at a uniform frequency of, e.g., about 300 points per second. Along with the spatial coordinates, a third coordinate, pressure p, is optionally recorded at the same time points.

Although the recorded data are typically smooth, there are occasional gross outliers and noisy points which need to be removed (typically, less than 1% of the total). These are easily identified by their large Euclidean distance from the neighboring points.

According to a currently preferred embodiment, a smooth path is then constructed through the remaining x and y coordinates for each word in each signature.

This is preferably done by smoothing each coordinate separately against time using a cubic smoothing spline.

In a currently preferred embodiment, the amount of smoothing is chosen automatically by global cross-validation of the integrated Euclidean distance between the observed and fitted points. Typically very little smoothing is performed, and the fitted curves usually come close to interpolating the observed sequences. There are three reasons for smoothing the signature sequences in this way: (1) even though the amount of smoothing is small, it tends to eliminate small discontinuities introduced by measurement error due to the discretization during the recording process, or small movements during the signing; (2) the cubic spline representation turns the sequence into a function that can be evaluated at any point t (this is convenient for purposes of subsequent steps); and (3) the cubic spline has two continuous derivatives, the first of which is used in the speed computation.

If the observed signature sequence is denoted by

$$X_i,\ i = 1, \ldots, N$$

measured at time points $t_i$, then the smoothed signature **S**(t) minimizes the criterion

$$\sum_{i=1}^{N} \|\mathbf{X}_i - \mathbf{S}(t_i)\|^2 + \lambda \int \|\mathbf{S}''(t)\|^2\, dt$$

over a suitable Sobolev space of functions, and for some value of the smoothing parameter λ. The solution varies dramatically with the value of the smoothing parameter, which has to be supplied. It is desirable to use the cross-validated integrated Euclidean squared distance

$$CV(\lambda) = \sum_{i=1}^{N} [\mathbf{X}_i - \mathbf{S}^{\lambda}_{(i)}(t_i)]^2$$

as a criterion for selecting λ. Here

$$S^{\lambda}_{(i)}(t_i)$$

is the value of the smooth curve evaluated at $t_i$; the subscript (i) indicates that the i-th point itself was omitted in the fitting of the curve. This criterion is desirable because it recognizes the signal in the signature, and selects a value for λ such that only enough smoothing is performed to eliminate the small amount of measurement error.

A time-dependent speed signal is calculated for each of the n smoothed sample signatures. It should be noted in this regard that appropriate speed signals are generated by the exemplary smoothing method.

Each of the smoothed signatures may be characterized by a group of at least four *measures* which are readily calculable from the smoothed signature. Each measure is a well-defined mathematical property of a sampled signature which is potentially useful for identifying the writer of that signature because it varies relatively little between signatures made by the same writer. Such a measure represents spatial and/or dynamic properties of the signature. It should be noted, however, that although a group of relatively invariant measures can generally be found for any given writer, the same group generally will not work for other writers. Instead, different writers generally have different (relatively) invariant measures. From the individual measures, averages and deviations, as discussed above, are readily calculated as parameters which characterize the reference set as a whole.

One measure is simply the total path length L of the signature (optionally scaled by the horizontal width of the signature), which is readily calculable from the stored array corresponding to the sampled (and smoothed) signature. Another measure is the total duration T of the signature, which is calculable as the number of points sampled during the recording of the signature, divided by the sampling rate. Various other measures are readily calculated from the horizontal speed signal $v_x$, the vertical speed signal $v_y$, the horizontal acceleration signal $a_x$, and the vertical acceleration signal $a_y$. These quantities are defined, respectively, as the first derivatives, with respect to time, of horizontal and vertical position, and the second derivatives, with respect to time, of horizontal and vertical position. As noted, $v_x$ and $v_y$ are calculated by the currently preferred smoothing algorithm. The acceleration signals $a_x$ and $a_y$ are also readily calculated by well known numerical techniques.

The path velocity magnitude (speed) v is expressed in terms of the horizontal and vertical speeds by:

$$v = \left(v_x^2 + v_y^2\right)^{1/2}.$$

The tangential acceleration $a_t$ is expressed in terms of the horizontal and vertical speeds and accelerations by:

$$a_t = (v_x a_x + v_y a_y)/v.$$

The centripetal acceleration $a_c$ can be expressed as:

$$a_c = (v_x a_y - v_y a_x)/v.$$

The magnitude a of the total acceleration is given by:

$$a = \left(a_x^2 + a_y^2\right)^{1/2}.$$

The time derivative j of acceleration, often referred to as "jerk," is also useful in this regard. Letting $j_x$ and $j_y$ represent, respectively, the time derivatives of $a_x$ and $a_y$, j may be expressed by

$$j = (a_x j_x + a_y j_y)/a.$$

Each of the quantities v, $a_c$, $a_t$, a, and j is readily calculated as a function of time. Using well known numerical techniques, the rms value of each of these functions over the sampled (and smoothed) curve is readily calculated. Such calculations provide, respectively, the following measures: the rms speed V, the rms centripetal acceleration $A_c$, the rms tangential acceleration $A_t$, the rms total acceleration A, and the rms jerk J. Additionally, the mean value of $v_x$ is readily calculated, pro-

viding, as a measure, the average horizontal speed $\bar{V}_x$. Additionally, well known numerical techniques are readily used to integrate $a_c$ over the curve, providing, as a measure, the integral, with respect to time, of the magnitude of the centripetal acceleration, $IA_c$. The above-described measures have been found to be useful, in practice. However, this list is not exhaustive. Instead, many other potentially useful measures will be apparent to the skilled practitioner.

In the initializing phase, a group of measures, exemplarily the nine measures described above, is calculated. It should be noted in this regard that the two main aspects of signature data, namely, shape and dynamics, have somewhat complementary roles in distinguishing valid signatures from forgeries. That is, the harder a forger tries to copy every detail of a signature's *shape*, the less likely he is to match its *dynamics*, and vice versa. Therefore the parameter-matching stage should include measures which tend to differentiate between shape and dynamics, so that if one aspect is matched, the other is mismatched. We have found that for the purpose of differentiating between shape and dynamics, a particularly useful group of measures are those relating to (i.e., representing, or derived from) path-tangential and path-normal properties of the motion of the stylus tip. Such measures include V, $A_c$, $A_t$, A, J, and $IA_c$, described above. Accordingly, the initializing phase preferably includes calculating at least one such measure.

As noted, an important limitation on the measures used is that their variability should be small over the reference set of signatures, in order to reduce the likelihood of false rejection of valid signatures. Since each signature has its own characteristics, which slowly vary over time, measures are preferably chosen according to each individual's reference set of signatures, and that choice preferably evolves as the reference set changes over time.

According to a currently preferred embodiment, the nine measures described above are evaluated for each signature in the entrant's reference set. A subset of the nine measures, comprising those measures having the smallest standard deviations (when each is normalized to the corresponding mean) is selected as the measure space for that entrant. Preferably, at least three measures are selected.

With regard to the verification phase, suppose an entrant signature is submitted by entrant i. Let $M_{ij}$ be the value of the j-th measure in the subset of $N_i$ measures selected for entrant i. (It should be noted that in general, not all of the measures that were evaluated for the reference signatures will be selected for use in the verification phase. Instead, a subset will be selected, including, e.g., only those measures displaying the smallest standard deviation over the reference set.) Also, let $\mu_{ij}$ and $\sigma_{ij}$ denote the mean and standard deviation, respectively, of $M_{ij}$ over the current reference set. The magnitude, $E_i$, of the error vector in this measure space for subject i is usefully defined as

$$E_i = [\sum_{j=1}^{N_i}((M_{ij}-\mu_{ij})/\sigma_{ij})^2]^{1/2} .$$

According to a currently preferred screening test, a cutoff threshold $C_i$ is determined from the reference set of entrant i. If $E_i$ is less than $C_i$ (or alternatively, *less than or equal to* $C_i$), the entrant signature is accepted. Otherwise, the signature is rejected.

In typical applications, the objective of this screening procedure will be to quickly reject crude forgeries or errors in signing, but accept, for second-stage testing, signatures which may be either valid signatures or skillful forgeries. Accordingly, the error threshold should lie far enough above the largest error in the reference set to insure a very low false rejection rate.

According to the currently preferred embodiment, during the intializing phase, the error $E_i$ is calculated for each of the reference signatures, treating that signature as though it were an entrant signature. The greatest of the errors calculated in that way (i.e., the reference errors) is the yardstick for establishing the cutoff threshold $C_i$. That is, $C_i$ is set to be equal to the greatest reference error, or it is set to some incrementally higher value, such as 10% above the greatest reference error.

It should be noted in this regard that during the initializing phase, well-known statistical methods can be used for recognizing reference signatures having anomalous errors. Such anomalies might arise, for example, from non-reproduceable errors in the entrant's penmanship. Such anomalous signatures are optionally eliminated from the reference set.

The foregoing discussion is summarized in FIG. 1. Means 100 are provided for inputting a reference set of signatures, during the initializing phase 010, to digital conversion and storage means 110, which exemplarily comprise a digital central processing unit. Analogous (and, for at least some applications, identical) inputting means 120 and conversion and storage means 130 are provided for the entry and storage of at least one entrant signature in the verification phase 020. Data representing the reference set of signatures are processed to obtain a set of dynamical parameters, typically the mean and standard deviation over the reference set of each of a set of measures. For illustrative purposes, three such measures, 140.1, 140.2, 140.3, are represented in the figure. The verification phase includes a parameter-matching stage 030 and one or more optional second (and higher) stages 040. In the parameter-matching stage, the stored, digitized entrant signature is subjected to digital processing 150, resulting, in the example of the figure, in computed values $M_{i1}$, $M_{i2}$, and $M_{i3}$, corresponding, respectively, to measures 140.1 - 140.3. Significantly, only *selected* measures are evaluated in this stage. As noted, the index i identifies the entrant whose signature is being verified, and the index j here identifies one of the selected measures. In processing step 160, an error is calculated from the parameter values and the

$M_{ij}$ values. In processing step 170, the error is compared to a threshold value. If the error exceeds the threshold, the signature is rejected. At this point, a new submission of an entrant signature may be requested, or the transaction with the entrant may simply be terminated. If the signature is accepted, and if there is only one verification stage, electric circuit 050 is activated, making access to a system available to the entrant. (For purely illustrative purposes, such activation is depicted in the figure as activation of a relay.) If, as depicted in the figure, the verification phase has a second stage, the stored signature data are subjected to a second stage verification process 180 resulting, as before, in either rejection, or acceptance and granting of access, or acceptance and invocation of a still higher verification stage.

Significantly, in the parameter-matching stage 030, the entrant signature is compared against a relatively small amount of data relating to the reference set. Such data consist of the identities of the selected measures, the means (or other averages) and standard deviations (or other deviations) of those measures over the reference set, and the threshold value. As part of the initializing phase, those data are conveniently digitally stored at a site which is local relative to the entrant. Such a site is, e.g., associated with a computer terminal or automatic teller machine through which the entrant conducts transactions with the access-controlled system. A particularly convenient location for such storage is a small, portable object such as a credit card equipped with a digital data storage medium (e.g., magnetic storage or a solid state microchip memory device) and carried by the entrant.

Accordingly, an embodiment of the invention is readily envisioned in which the initializing phase includes local storage of data, as described. In a subsequent, parameter-matching stage, the data are entered into the access-controlled system from the local data storage medium.

Example

The initial database obtained for this study included reference sets, of 10 signatures each, belonging to the four human subjects identified as EP, FS, SG, and WN. Forgeries were also obtained as follows: of the signature of subject EP, 10 forgeries; of FS, 9; of SG, 4; and of WN, 10. The four forgers were volunteers who were shown samples of the signature they were to imitate, and allowed to practice (generally 5-10 minutes) until they felt ready to produce the forgery samples. Each forger imitated the signature of one of the four subjects.

The nine measures described above were evaluated on each reference set, and the mean and standard deviation of each measure within each set were computed.

It should be noted that to make the parameter-matching procedure automatic, a set of rules is needed for selecting the number $N_i$ and set $\{M_{ij}\}$ of measures to use in computing the error magnitude $E_i$ for subject i, and for establishing the proper threshold $C_i$ to obtain the desired low level of false rejections.

With reference to FIG. 2, an exemplary procedure was established as follows: For each subject, the nine measures were rank ordered (Step 200 of the figure) according to the standard deviation of each measure (normalized to the corresponding mean) over that subject's reference set. The reference error was then repeatedly computed for each signature in the reference set, using successively larger subsets of the nine rank-ordered measures. It was observed that subsets of the best three measures would offer only slightly better discrimination between valid and forged signatures than would subsets of the best two measures. Subsets of four measures would offer substantially better discrimination. However, when more than four measures were considered, the variability over the reference set was observed to increase. Therefore, on the basis of the existing data, the four top-ranked measures were chosen (Step 210). The largest reference error was computed (Step 220), and the threshold value $C_i$ was arbitrarily set at a value 10% greater than that value (Step 230 of FIGS. 1 and 2). This value is readily adjusted in accordance with false rejection statistics in a given population.

The parameter-matching procedure was applied to the valid and forged signatures of subjects SG, FS, WN, and EP, using the four best measures for each in the computation of the entrant errors. The results, displayed in FIGS. 3 - 6, show the magnitude of error for the 10 valid signatures in the left group of bars and the forgeries in the right group of each plot. The dotted line is the value of $C_i$ for each subject. The four measures chosen for each subject are also listed in each plot.

It is apparent from the figures that the FS (FIG. 4) and SG (FIG. 3) forgeries could be readily discriminated from the valid signature reference set. The WN (FIG. 5) forgeries were detectable. However, the WN reference set displayed enough variablilty to suggest that the threshold should be set higher than the adopted 10% margin, in order to reduce false rejections. Such a change, however, would be liable to result in the acceptance, as valid, of forgeries only slightly better than those that were made. The EP (FIG. 6) forgeries were quite skillfully matched to the statistics of the measures used, and only 4 out of 10 were rejected. (It should be noted that a second-stage verification procedure involving more detailed *shape* analysis would be likely to succeed in rejecting such forgeries as survive the parameter-matching procedure.) Significantly, the second signature in the EP reference set had a substantially larger error than the other nine. If that signature were removed from the reference set, the threshold would be lowered to a level where only one of the forgeries would be accepted as valid.

**Claims**

1. A method for operating an access-controlled system, in which access is given to a human entrant by activation of an electric circuit (50) when a signature by the entrant, to be referred to as an entrant signature, is accepted as the signature of an authorized user of the system, wherein the method comprises an initializing phase (10) and a verification phase (20), and:

a) the initializing phase (10) comprises sending electrical signals that represent a plurality of genuine signatures of the entrant comprised in a reference set, obtained by human manipulation of an electromechanical transducer (100), to a digital processor, said signals to be referred to as initializing-phase output signals;
b) the initializing phase further comprises digitally processing the initializing-phase output signals such that for each signature in the reference set, a set of at least four numerical quantities is calculated, wherein each of said quantities represents a respective, predetermined spatial and/or dynamic signature property, to be referred to as a measure;
c) the initializing phase (10) further comprises calculating an average of each measure over the reference set;
d) the initializing phase (10) further comprises selecting, from the measures, a chosen subset of measures (210);
e) the initializing phase further comprises calculating a reference error associated with each of the reference signatures, and from the reference errors, calculating a threshold for accepting or rejecting the entrant signature (230);
f) the verification phase comprises sending electrical signals that represent an entrant signature, obtained by human manipulation of an electromechanical transducer (120), to a digital processor, said signals to be referred to as verification-phase output signals;
g) the verification phase further comprises digitally processing the verification-phase output signals such that a numerical value relating to the entrant signature is calculated for each measure in the chosen subset (150);
h) the verification phase further comprises calculating a mismatch between: (i) the measures in the chosen subset as averaged over the reference set; and (ii) the same measures as evaluated for the entrant signature (160);
i) the verification phase further comprises comparing the mismatch to the threshold (170), and generating an acceptance signal if the mismatch is less than the threshold; and
j) the method further comprises, responsive to the acceptance signal, activating an electric circuit (150) that unlocks the system,

CHARACTERIZED IN THAT

k) the step of selecting the said subset consists of individually calculating a deviation (σ) of each measure over the reference set (140.1, 140.2, 140.3), rank-ordering the deviations, and selecting the N measures having the smallest deviations, N an integer at least 3, and smaller than the initial number of numerical quantities determined in step b.

2. The method of claim 1, wherein at least one of the measures is selected from the group consisting of: the total signature length, the total signature duration, the rms speed, the rms centripetal acceleration, the rms tangential acceleration, the rms total acceleration, the rms jerk, the mean value of the horizontal speed, and the integral with respect to time of the magnitude of the centripetal acceleration.

3. The method of claim l, wherein at least one of the measures represents, or is derived from, a path-normal or path-tangential property of the reference signatures.

4. The method of claim 1, wherein the average of each measure over the reference set is the statistical mean of that measure over the reference set, and the deviation of each measure over the reference set is the standard deviation.

5. The method of claim 4, wherein:

a) the mismatch $E_i$ for the signature of the i-th entrant is calculated from the expression

$$E_i = [\sum_{j=1}^{N_i}((M_{ij}-\mu_{ij})/\sigma_{ij})^2]^{1/2} ,$$

where $M_{ij}$ denotes the j-th one of the selected measures of the chosen subset evaluated for the signature of the i-th entrant, $N_i$ denotes the total number of measures included in the chosen subset for the i-th entrant, $\mu_{ij}$ denotes the mean of the j-th measure over the i-th reference set, $\sigma_{ij}$ denotes the standard deviation of the j-th measure over the i-th reference set, and the summation is carried out over the selected measures of the chosen subset; and

the reference error associated with each of the reference signatures is calculated by treating each reference signature, in turn, like an entrant signature and calculating the corresponding mismatch.

6. The method of claim 5, wherein the step of calculating the threshold comprises identifying the largest reference error, and selecting a threshold value which is greater than or equal to the largest reference error.

**7.** The method of claim 1, wherein:

a) the initializing phase further comprises digitally storing, on a storage medium that is local with respect to at least one entrant, data which comprise: the identities of the selected measures of the chosen subset, the averages and deviations of the selected measures of the chosen subset over the reference set, and the threshold value; and

b) the verification stage further comprises reading the locally stored data.

**8.** The method of claim 1, wherein at least five measures are evaluated for each reference signature, and exactly four measures are selected for inclusion in the chosen subset.

**Patentansprüche**

**1.** Verfahren zum Betreiben eines Systems mit Zutrittkontrolle, wobei einer Eintritt suchenden Person durch Aktivierung einer elektrischen Schaltung (50) Zutritt gewährt wird, wenn eine als Eintrittsucherunterschrift zu bezeichnende Unterschrift des Eintrittssuchenden als die Unterschrift eines berechtigten Benutzers des Systems angenommen wird, wobei das Verfahren eine Initialisierungsphase (10) und eine Überprüfungsphase (20) umfaßt und:

a) die Initialisierungsphase (10) das Senden von elektrischen Signalen, die eine Mehrzahl von in einer Bezugsmenge enthaltenen echten Unterschriften des Eintrittsuchers, die durch menschliche Handhabung eines elektromechanischen Wandlers (10) erhalten wurden, darstellen, zu einem Digitalprozessor umfaßt, wobei die besagten Signale als Initialisierungsphasen-Ausgangssignale bezeichnet werden; und

b) die Initialisierungsphase weiterhin das digitale Verarbeiten der Initialisierungsphasen-Ausgangssignale umfaßt, so daß für jede Unterschrift in der Bezugsmenge eine Menge von mindestens vier numerischen Größen berechnet wird, wobei jede der besagten Größen eine entsprechende vorbestimmte räumliche und/oder dynamische Unterschriftseigenschaft darstellt, die als Maß bezeichnet wird;

c) die Initialisierungsphase (10) weiterhin das Berechnen eines Durchschnittswertes jedes Maßes über die Bezugsmenge umfaßt;

d) die Initialisierungsphase (10) weiterhin das Auswählen einer gewählten Teilmenge von Maßen (210) unter den Maßen umfaßt;

e) die Initialisierungsphase weiterhin das Berechnen eines mit jeder der Bezugsunterschriften verbundenen Bezugsfehlers und, aus den Bezugsfehlern, das Berechnen eines Schwellwerts zur Annahme bzw. Abweisung der Eintrittsucherunterschrift (230) umfaßt;

f) die Überprüfungsphase das Senden von elektrischen Signalen, die eine durch menschliche Handhabung eines elektromechanischen Wandlers (120) erhaltene Eintrittsucherunterschrift darstellen, zu einem Digitalprozessor umfaßt, wobei die besagten Signale als Überprüfungsphasen-Ausgangssignale bezeichnet werden;

g) die Überprüfungsphase weiterhin das digitale Verarbeiten der Überprüfungsphasen-Ausgangssignale umfaßt, so daß ein auf die Eintrittsucherunterschrift bezogener numerischer Wert für jedes Maß in der gewählten Teilmenge (150) berechnet wird;

h) die Überprüfungsphase weiterhin das Berechnen einer Unpaarigkeit zwischen: (i) den über die Bezugsmenge gemittelten Maßen in der gewählten Teilmenge und (ii) denselben, für die Eintrittsucherunterschrift (160) ausgewerteten Maßen umfaßt;

i) die Überprüfungsphase weiterhin das Vergleichen der Unpaarigkeit mit dem Schwellwert (170) und das Erzeugen eines Annahmesignals, wenn die Unpaarigkeit unter dem Schwellwert liegt, umfaßt; und

j) das Verfahren weiterhin das Aktivieren einer elektrischen Schaltung (150), die das System entsperrt, als Reaktion auf das Annahmesignal umfaßt,

dadurch gekennzeichnet, daß

k) der Schritt des Auswählens der besagten Teilmenge aus dem einzelnen Berechnen einer Abweichung (σ) jedes Maßes über die Bezugsmenge (140.1, 140.2, 140.3), dem rangweisen Ordnen der Abweichungen und dem Auswählen der N Maße mit den geringsten Abweichungen besteht, wobei N eine Ganzzahl von mindestens 3 und kleiner als die Anfangszahl der im Schritt b bestimmten numerischen Größen ist.

**2.** Verfahren nach Anspruch 1, wobei mindestens eines der Maße aus der Gruppe ausgewählt wird, die aus folgenden besteht: der gesamten Unterschriftslänge, der gesamten Unterschriftsdauer, der effektiven Geschwindigkeit, der effektiven Zentripetalbeschleunigung, der effektiven Tangentialbeschleunigung, der effektiven Gesamtbeschleunigung, dem effektiven Ruck, dem Mittelwert der horizontalen Geschwindigkeit und dem Integral nach Zeit der

Größe der Zentripetalbeschleunigung.

3. Verfahren nach Anspruch 1, wobei mindestens eines der Maße eine wegnormale oder wegtangentiale Eigenschaft der Bezugsunterschriften darstellt oder von diesen abgeleitet ist.

4. Verfahren nach Anspruch 1, wobei der Mittelwert jedes Maßes über die Bezugsmenge das statistische Mittel dieses Maßes über die Bezugsmenge ist, und die Abweichung jedes Maßes über die Bezugsmenge die Standardabweichung ist.

5. Verfahren nach Anspruch 4, wobei:

a) die Unpaarigkeit $E_i$ für die Unterschrift des i-ten Eintrittsuchers aus dem Ausdruck

$$E_i = [\sum_{j=1}^{N_i}((M_{ij}-\mu_{ij})/\sigma_{ij})^2]^{1/2},$$

berechnet wird, wobei $M_{ij}$ das j-te der ausgewählten Maße der gewählten für die Unterschrift des i-ten Eintrittsuchers ausgewählten Teilmenge ist, $N_i$ die Gesamtzahl von in der gewählten Teilmenge für den i-ten Eintrittsucher enthaltenen Maßen ist, $\mu_{ij}$ das Mittel des j-ten Maßes über die i-te Bezugsmenge ist, $\sigma_{ij}$ die Standardabweichung des j-ten Maßes über die i-te Bezugsmenge ist und die Summierung über die ausgewählten Maße der gewählten Teilmenge ausgeführt wird; und

der mit jeder der Bezugsunterschriften verbundene Bezugsfehler dadurch berechnet wird, daß jede Bezugsunterschrift nacheinander wie eine Eintrittsucherunterschrift behandelt und die entsprechende Unpaarigkeit berechnet wird.

6. Verfahren nach Anspruch 5, wobei der Schritt des Berechnens des Schwellwertes das Kennzeichnen des größten Bezugsfehlers und Auswählen eines Schwellwertes, der größer gleich dem größten Bezugsfehler ist, umfaßt.

7. Verfahren nach Anspruch 1, wobei:

a) die Initialisierungsphase weiterhin das digitale Speichern - auf einem in bezug auf mindestens einen Eintrittsucher lokalen Speichermittel - von Daten umfaßt, die folgendes umfassen: die Identitäten der ausgewählten Maße der gewählten Teilmenge, die Mittelwerte und Abweichungen der ausgewählten Maße der gewählten Teilmenge über die Bezugsmenge und den Schwellwert; und

b) die Überprüfungsstufe weiterhin das Lesen der lokal gespeicherten Daten umfaßt.

8. Verfahren nach Anspruch 1, wobei für jede Bezugsunterschrift mindestens fünf Maße ausgewertet werden und genau vier Maße für den Einschluß in die gewählte Teilmenge ausgewählt werden.

## Revendications

1. Procédé d'exploitation d'un système à contrôle d'accès, dans lequel l'accès est consenti à un individu entrant par activation d'un circuit électrique (50) quand une signature par l'individu entrant, désignée signature d'individu entrant, est acceptée comme la signature d'un utilisateur autorisé du système, dans lequel le procédé comprend une phase d'initialisation (10) et une phase de vérification (20), et:

a) la phase d'initialisation (10) comprend l'envoi de signaux électriques qui représentent une pluralité de signatures authentiques de l'individu entrant, comprises dans un ensemble de référence, obtenues par la manipulation humaine d'un transducteur électromécanique (10) à un processeur numérique, lesdits signaux étant désignés signaux de sortie de phase d'initialisation;

b) la phase d'initialisation comprend en outre le traitement numérique des signaux de sortie de phase d'initialisation de telle sorte que pour chaque signature dans l'ensemble de référence, un ensemble d'au moins quatre quantités numériques est calculé, dans lequel chacune desdites quantités représente une propriété de signature spatiale et/ou dynamique prédéterminée, respective, désignée mesure;

c) la phase d'initialisation (10) comprend en outre le calcul d'une moyenne de chaque mesure dans l'ensemble de référence;

d) la phase d'initialisation (10) comprend en outre la sélection, à partir des mesures, d'un sous-ensemble choisi de mesures (210);

e) la phase d'initialisation comprend en outre le calcul d'une erreur de référence associée à chacune des signatures de référence, et à partir des erreurs de référence, le calcul d'un seuil d'acception ou de rejet de la signature de l'individu entrant (230);

f) la phase de vérification comprend l'envoi de signaux électriques qui représentent une signature d'individu entrant, obtenue par manipulation humaine d'un transducteur électromécanique (120), à un processeur numérique, lesdits signaux étant désignés signaux de sortie de phase de vérification;

g) la phase de vérification comprend en outre le traitement numérique des signaux de sortie de phase de vérification de telle sorte qu'une valeur numérique se rapportant à la signature

de l'individu entrant est calculée pour chaque mesure dans le sous-ensemble choisi (150);

h) la phase de vérification comprend en outre le calcul d'une désadaptation entre: (i) les mesures dans le sous-ensemble choisi telles qu'établies en moyenne dans l'ensemble de référence; et (ii) les mêmes mesures telles qu'évaluées pour la signature de l'individu entrant (160);

i) la phase de vérification comprend en outre la comparaison de la désadaptation par rapport au seuil (120), et la génération d'un signal d'acceptation si la désadaptation est inférieure au seuil; et

j) le procédé comprend en outre, en réponse au signal d'acceptation, l'activation d'un circuit électrique (150) qui débloque le système,

CARACTERISE EN CE QUE

k) l'étape de sélection dudit sous-ensemble consiste à calculer individuellement un écart ($\sigma$) de chaque mesure dans l'ensemble de référence (140-1, 140-2, 140-3), classer les écarts, et sélectionner les N mesures ayant les plus petits écarts, N étant un nombre entier d'au moins 3, et inférieur au nombre initial de quantités numériques déterminées à l'étape b.

**2.** Procédé de la revendication 1, dans lequel au moins l'une des mesures est sélectionnée dans le groupe consistant en: la longueur de signature totale, la durée de signature totale, la vitesse efficace, l'accélération centripète efficace, l'accélération tangentielle efficace, l'accélération totale efficace, la suraccélération efficace, la valeur moyenne de la vitesse horizontale, et l'intégrale par rapport au temps de la grandeur de l'accélération centripète.

**3.** Procédé de la revendication 1, dans lequel au moins l'une des mesures représente, ou est dérivée de, une propriété normale au chemin ou tangentielle au chemin des signatures de référence.

**4.** Procédé de la revendication 1, dans lequel la moyenne de chaque mesure dans l'ensemble de référence est la moyenne statistique de cette mesure dans l'ensemble de référence, et l'écart de chaque mesure dans l'ensemble de référence est l'écart type.

**5.** Procédé de la revendication 4, dans lequel:

a) la désadaptation $E_i$ de la signature du $i^e$ individu entrant est calculée à partir de l'expression

$$E_i = \left[ \sum_{j=1}^{N_i} \left( (M_{ij} - \mu_{ij}) / \sigma_{ij} \right)^2 \right]^{1/2}$$

où $M_{ij}$ indique la $j^e$ mesure des mesures sélectionnées du sous-ensemble choisi évaluée pour la signature du $i^e$ individu entrant, $N_i$ indique le nombre total de mesures incluses dans le sous-ensemble choisi pour l'$i^e$ individu entrant, $\mu_{ij}$ indique la moyenne de la $j^e$ mesure sur l'$i^e$ ensemble de référence, $\sigma_{ij}$ indique l'écart type de la $j^e$ mesure sur l'$i^e$ ensemble de référence, et la somme est effectuée sur les mesures sélectionnées du sous-ensemble choisi; et

l'erreur de référence associée à chacune des signatures de référence est calculée en traitant chaque signature de référence, une par une, comme une signature d'individu entrant et en calculant la désadaptation correspondante.

**6.** Procédé de la revendication 5, dans lequel l'étape de calcul du seuil comprend l'identification de la plus grande erreur de référence, et la sélection d'une valeur de seuil qui est supérieure ou égale à la plus grande erreur de référence.

**7.** Procédé de la revendication 1, dans lequel:

a) l'étape d'initialisation comprend en outre le stockage numérique, sur un support de stockage qui est local par rapport à au moins un individu entrant, de données qui comprennent: les identités des mesures sélectionnées du sous-ensemble choisi, les moyennes et écarts des mesures sélectionnés du sous-ensemble choisi dans l'ensemble de référence, et la valeur de seuil; et

b) l'étape de vérification comprend en outre la lecture de données stockées localement.

**8.** Procédé de la revendication 1, dans lequel au moins cinq mesures sont évaluées pour chaque signature de référence, et exactement quatre mesures sont sélectionnées en vue de leur inclusion dans le sous-ensemble choisi.

FIG. 1

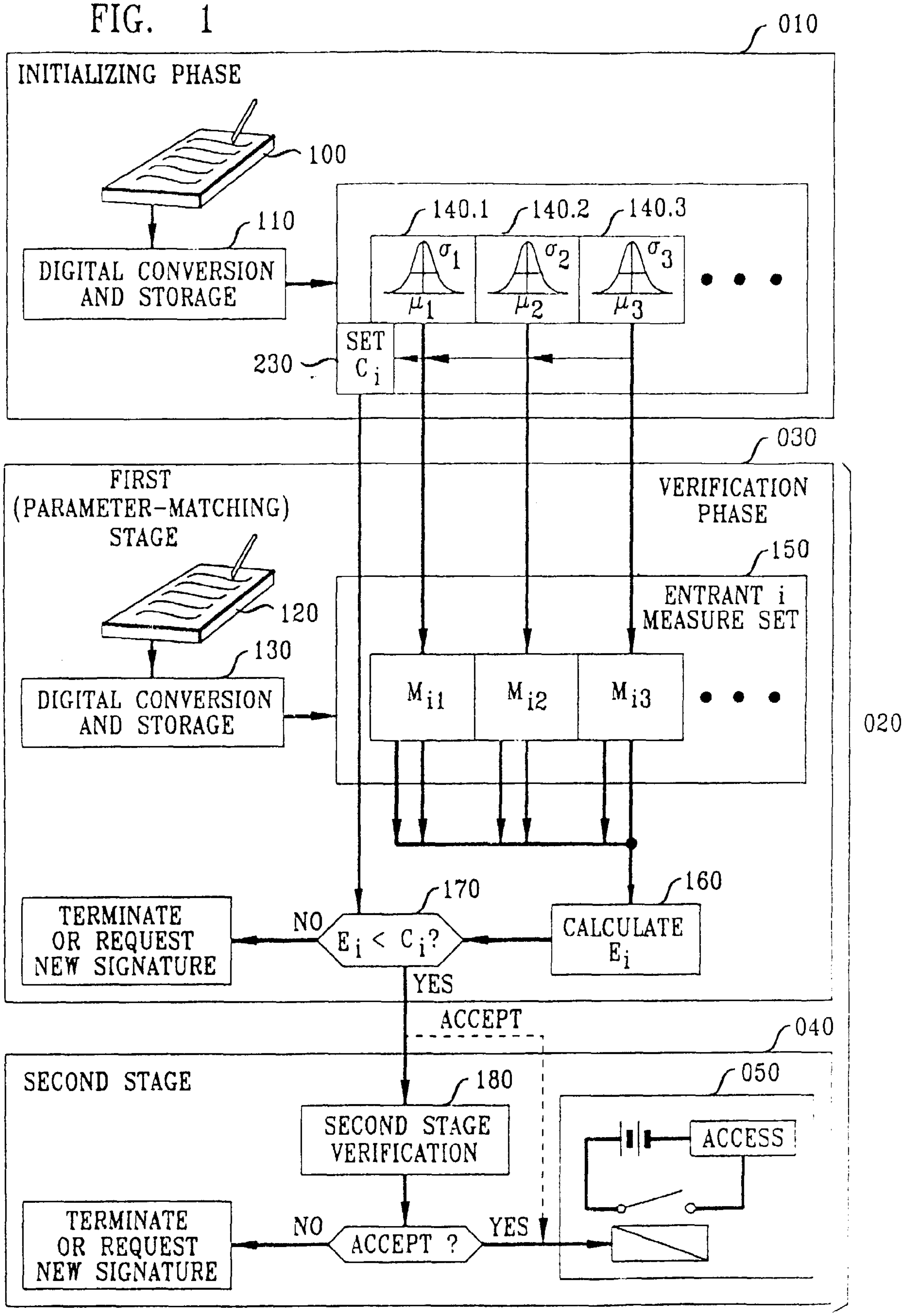
010
INITIALIZING PHASE
100
110
DIGITAL CONVERSION AND STORAGE
140.1
140.2
140.3
SET $C_i$
230
030
FIRST (PARAMETER-MATCHING) STAGE
VERIFICATION PHASE
150
ENTRANT i MEASURE SET
120
130
DIGITAL CONVERSION AND STORAGE
$M_{i1}$
$M_{i2}$
$M_{i3}$
020
170
160
TERMINATE OR REQUEST NEW SIGNATURE
NO
$E_i < C_i$?
CALCULATE $E_i$
YES
ACCEPT
040
SECOND STAGE
180
050
SECOND STAGE VERIFICATION
ACCESS
TERMINATE OR REQUEST NEW SIGNATURE
NO
ACCEPT ?
YES

FIG. 2

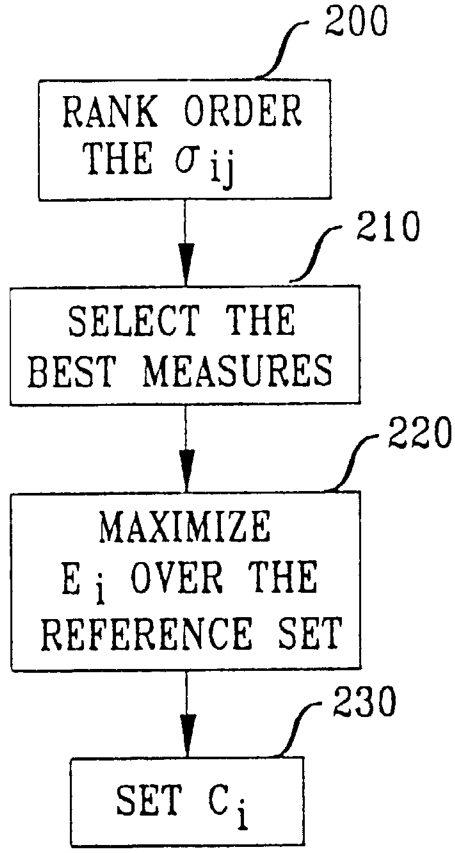
200
RANK ORDER THE $\sigma_{ij}$
210
SELECT THE BEST MEASURES
220
MAXIMIZE $E_i$ OVER THE REFERENCE SET
230
SET $C_i$

FIG. 3

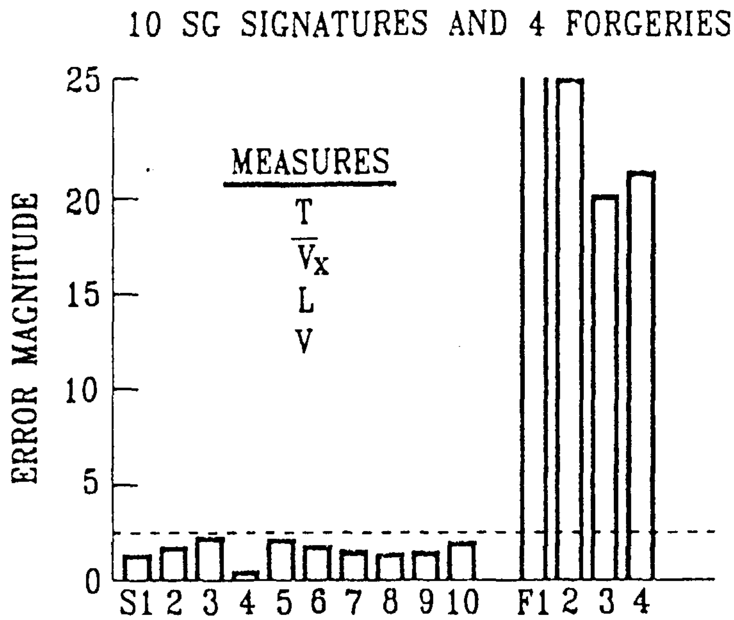
10 SG SIGNATURES AND 4 FORGERIES
ERROR MAGNITUDE
25
20
15
10
5
0
MEASURES
T
$\overline{V}_X$
L
V
S1 2 3 4 5 6 7 8 9 10
F1 2 3 4

FIG. 4

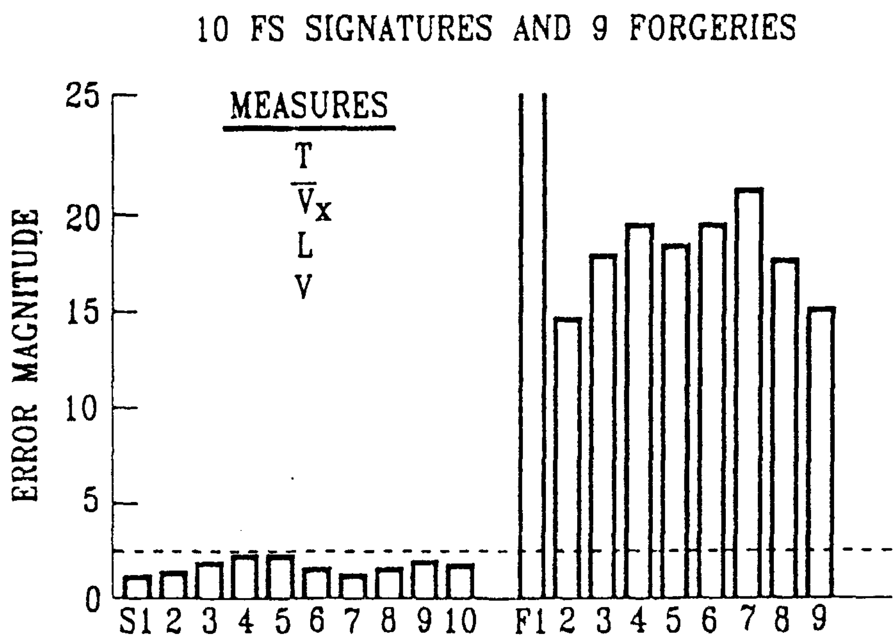
10 FS SIGNATURES AND 9 FORGERIES
ERROR MAGNITUDE
25
20
15
10
5
0
MEASURES
T
$\overline{V}_X$
L
V
S1 2 3 4 5 6 7 8 9 10
F1 2 3 4 5 6 7 8 9

FIG. 5

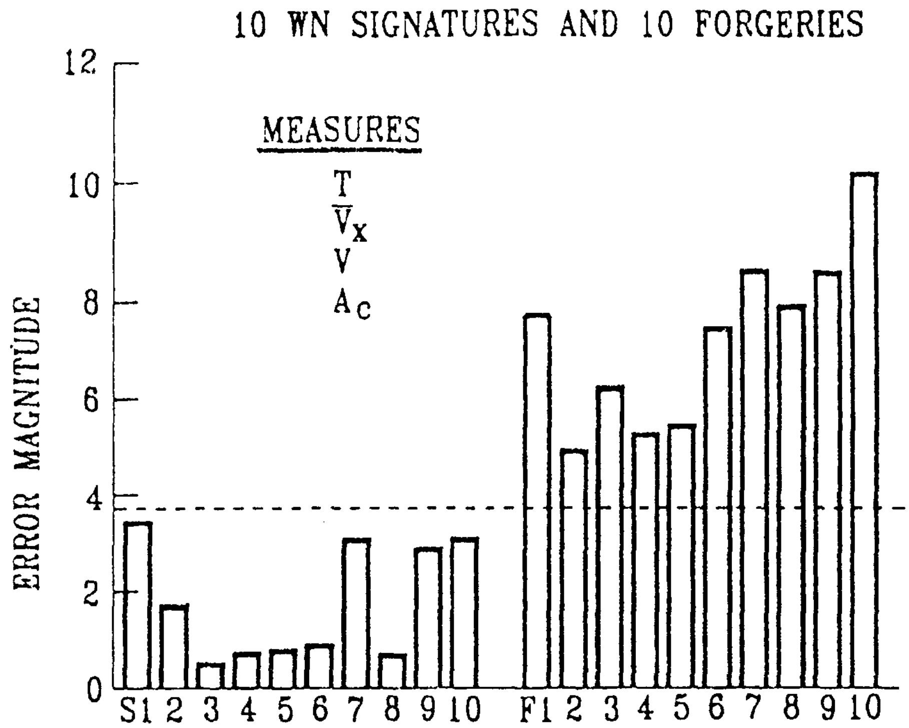
10 WN SIGNATURES AND 10 FORGERIES
MEASURES
T
$\overline{V}_X$
V
$A_C$
ERROR MAGNITUDE
0
2
4
6
8
10
12
S1 2 3 4 5 6 7 8 9 10
F1 2 3 4 5 6 7 8 9 10

FIG. 6

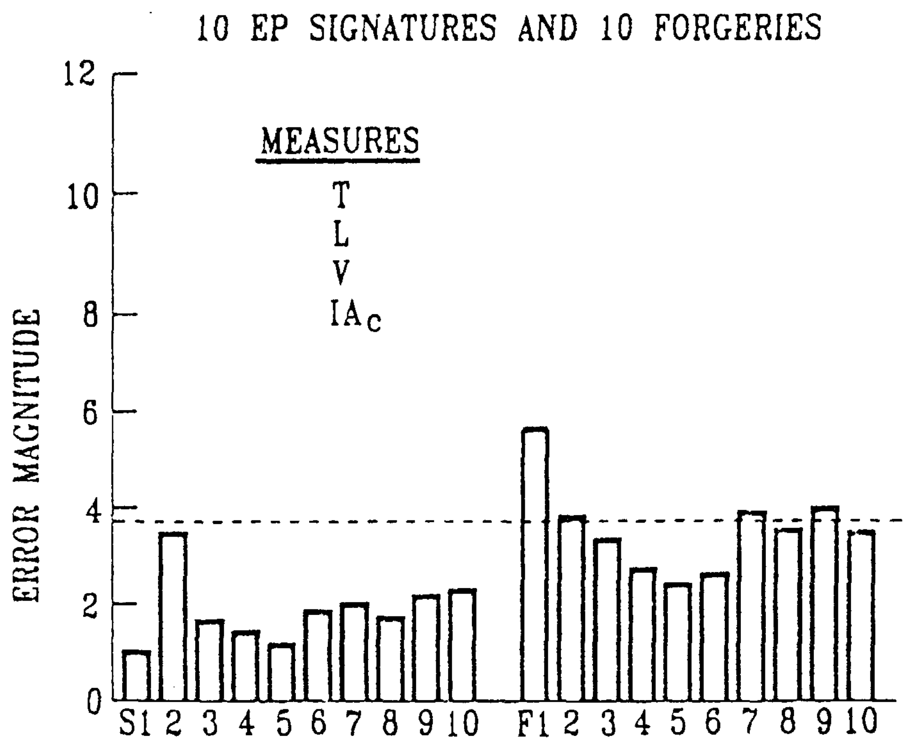
10 EP SIGNATURES AND 10 FORGERIES
MEASURES
T
L
V
$IA_C$
ERROR MAGNITUDE
0
2
4
6
8
10
12
S1 2 3 4 5 6 7 8 9 10
F1 2 3 4 5 6 7 8 9 10